Europäisches Patentamt

European Patent Office

Office européen des brevets

(11) Veröffentlichungsnummer: **0 214 327**
**B1**

# (12) EUROPÄISCHE PATENTSCHRIFT

(45) Veröffentlichungstag der Patentschrift:
15.03.89

(51) Int. Cl.⁴: **H04N 9/47**, H04N 5/46

(21) Anmeldenummer: 85111257.3

(22) Anmeldetag: 06.09.85

(54) **Digitalschaltung zur Zeilen-Erkennung von SECAM-Farbdifferenzsignalen.**

(43) Veröffentlichungstag der Anmeldung:
18.03.87 Patentblatt 87/12

(45) Bekanntmachung des Hinweises auf die Patenterteilung:
15.03.89 Patentblatt 89/11

(84) Benannte Vertragsstaaten:
DE FR NL

(56) Entgegenhaltungen:
DE-A- 3 432 311

ITT-Intermetall: "DIGIT 2000 VLSI Digital
TV-system", 1985-6, Seiten 176-183
A. Dubec: "SECAM colour television systems",
Paris 1976, Seiten 37 und 38

(73) Patentinhaber: **Deutsche ITT Industries GmbH,
Hans-Bunte-Strasse 19 Postfach 840,
D-7800 Freiburg(DE)**

(72) Erfinder: **Mehrgardt, Sönke, Dr., Häglestrasse 26,
D-7801 March(DE)**
Erfinder: **Ehret, Bernd, Dipl.-Ing., Im Glaser 25,
D-7800 Freiburg/Brsg.(DE)**

## Beschreibung

Die Erfindung betrifft eine Digitalschaltung zur Zeilen-Erkennung von solchen SECAM-Farbdifferenzsignalen, die pro Zeile einen Farbburst enthalten, dessen Frequenz zeilenweise abwechselnd einen ersten oder einen zweiten Wert hat, in Farbfernsehempfängern mit von einem Systemtakt getakteten integrierten Schaltungen, vergleiche den Oberbegriff des Anspruchs 1.

Die Funktion einer derartigen Digitalschaltung ist in dem Datenbuch "DIGIT 2000 VLSI Digital TV System" der Firma Intermetall, Freiburg, 1985-6 (Juni) auf den Seiten 176 bis 183, insbesondere Seite 178 anhand der integrierten Schaltung SPU 2220 beschrieben. Wie die Fig. 11-3 auf Seite 178 zeigt, betrifft die vorbeschriebene Anordnung solche SECAM-Farbdifferenzsignale, die pro Zeile einen Farbburst enthalten, dessen Frequenz zeilenweise abwechselnd einen ersten oder einen zweiten Wert hat, was einer der Varianten des SECAM-Farbfernseh-Standards entspricht, vergleiche auch das Buch von A. Dubec "SECAM colour television systems", Paris 1976, Seiten 37 und 38.

Die in einer ersten Version der vorbeschriebenen Anordnung realisierte Teilschaltung für die beabsichtigte Zeilen-Erkennungsfunktion genügte nicht allen an sie zu stellenden Anforderungen. Deshalb liegt der in den Ansprüchen gekennzeichneten Erfindung die Aufgabe zugrunde, eine dafür besser geeignete Digitalschaltung anzugeben.

Ein Vorteil der Erfindung besteht darin, daß anders als bei der vorbeschriebenen Anordnung auf die genaue Einstellung des Schwellwertes, anhand dessen die Zeilen-Erkennung vorgenommen wird, verzichtet werden kann.

In der DE-A 3 432 311 ist ebenfalls eine Digitalschaltung zur Zeilen-Erkennung von SECAM-Farbdifferenzsignalen beschrieben, die das im Farbburst enthaltene Farbkennsignal mit einem Referenzsignal, das ungefähr die Frequenz fc = 4,4336 MHz hat, mischt. Da es sich dabei um eine Quadraturmischung handelt, ergibt sich nach der Mischung ein Inphasen- und ein Quadraturphasensignal, deren Vorzeichen der Bestimmung des jeweiligen Quadranten der Phasendifferenz aus Farbkennsignal und Referenzsignal dient. Die Zu- oder Abnahme des Phasenwinkels von einem zu einem anderen Abtastpunkt wird dabei durch Zählschaltungen registriert. Entsprechend der SECAM-Norm wechselt dabei das Ergebnis von Zeile zu Zeile. Dies wird in einer Schaltung zur Zeilenerkennung ausgewertet.

Der Erfindung wird nun anhand der Figuren der Zeichnung näher erläutert:

Fig. 1 zeigt in Form eines Blockschaltbildes ein Ausführungsbeispiel der Erfindung, und
Fig. 2 zeigt wiederum in Form eines Blockschaltbildes das Ausführungsbeispiel einer Weiterbildung der Erfindung.

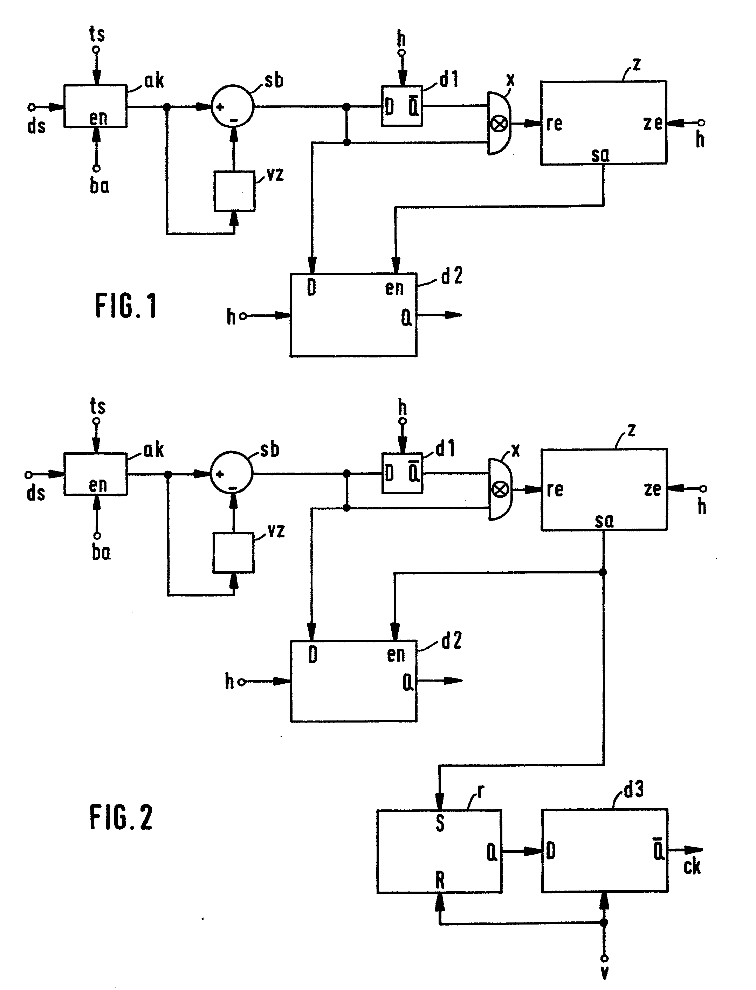

Im schematischen Blockschaltbild nach Fig. 1 ist als Ausführungsbeispiel eine erfindungsgemäße Digitalschaltung gezeigt. Dem Dateneingang des Akkumulators ak sind frequenzdemodulierte digitale Farbdifferenzsignale ds zugeführt, d.h. das Ausgangssignal eines digitalen Frequenzdemodulators, dem eingangsseitig das SECAM-Farb-Bild-Austast-Synchron-Signalgemisch zugeführt ist. Der Akkumulator ak erhält ferner an seinem Takteingang ein aus dem Systemtakt des digitalen Farbfernsehempfängers abgeleitetes Taktsignal ts zugeführt, dessen Frequenz gegenüber der des Systemtakts niedriger ist und vorzugsweise gleich einem Viertel der Systemtaktfrequenz ist, wenn diese wie üblich gleich dem Vierfachen der Farbträgerfrequenz ist. Ferner sind dem Enable-Eingang en des Akkumulators ak Burst-Auftastimpulse ba zugeführt, d.h. solche Impulse, deren zeitliche Lage mit dem Farbburst, der bekanntlich auf dem hinteren Teil der Schwarzschulter jeder Zeile auftritt, übereinstimmt und deren Impulsdauer mindestens gleich der Dauer des Farbbursts ist.

Der Akkumulator ak ist somit (nur) während der Dauer der Auftastimpulse ba wirksam und summiert die digitalen Farbdifferenzsignale ds im Takt des Taktsignals ts auf. Da dies für jeden am Enable-Eingang en liegenden Auftastimpulse ba vom Nullzustand des Akkumulators ak aus zu geschehen hat, wird der Akkumulator ak zweckmäßiger Weise von der Rückflanke jedes Auftastimpulses oder durch einen zu diesem Zeitpunkt erzeugten Impuls zurückgesetzt.

Der Ausgang des Akkumulators ak liegt direkt am Minuendeingang des Subtrahierers sb und über den Verzögerer vz, dessen Verzögerungszeit gleich einer Zeilendauer ist, am Subtrahendeingang des Subtrahierers sb. Dessen Vorzeichenausgang liegt am jeweiligen D-Eingang D des ersten und des zweiten D-Flipflops d1, d2 und an einem Eingang des EXOR-Gatters x, mit dessen anderem Eingang der Q-Ausgang Q̄ des ersten D-Flipflops d1 verbunden ist. Mittels des Verzögerers vz und des Subtrahierers sb wird das am Ende eines Auftastimpulses einer bestimmten Zeile im Akkumulator ak erreichte Ergebnis mit dem der vorhergehenden Zeile verglichen und von diesem Vergleich lediglich das Vorzeichen als Eingangssignal der beiden D-Flipflops d1, d2 und des EXOR-Gatters x verwendet.

Der Ausgang des EXOR-Gatters x liegt am Reset-Eingang re des Vorwärtszählers z, dessen Zähleingang ze ebenso wie dem jeweiligen Takteingang der beiden D-Flipflops d1, d2 horizontalfrequente Impulse h zugeführt sind. Ein wählbarer Zählerstandausgang sa des Zählers z liegt am Enable-Eingang en des zweiten D-Flipflops d2, dessen Q-Ausgang dem entsprechenden Ausgang des in SECAM-Farbfernsehempfängern üblichen sogenannten SECAM-Flipflops entspricht.

Die Teilschaltungen d1, x, z wirken als daraufhin überprüfende Vergleichsstufen, ob das Ausgangssignal des Subtrahierers sb als dessen Vorzeichen-Ausgangssignal zeilenweise einen Wechsel des Vorzeichens anzeigt, d.h. ob dieses Signal zeilenweise zwischen den beiden Binär-Pegeln H, L sich ändert. So lange diese Änderung auftritt, zählt der Zähler z die an seinem Zählereingang ze liegenden horizontalfrequenten Impulse h. Er wird dagegen vom EXOR-Gatter x über den Reset-Eingang re zurückgesetzt, sobald der erwähnte Vorzeichenwechsel nicht mehr auftritt. Wird während eines Zählzyklus des Zählers z der freiwählbare Zählerstand sa erreicht, so wird dadurch der Enable-Eingang en des zweiten D-Flipflops d2 aktiviert, das als durch zwei teilende Frequenzteilerstufe wirkt.

Die Fig. 2 zeigt eine Weiterbildung der Anordnung nach Fig. 1 zur Erzeugung des Signals ck für die Farbunterdrückung. Dazu sind zusätzlich zu den Teilschaltungen der Fig. 1, die in Fig. 2 nochmals gezeigt sind, das RS-Flipflop r und das dritte D-Flipflop d3 vorgesehen. Der S-Eingang S des RS-Flipflops r ist mit dem erwähnten Zählerstandausgang sa des Vorwärtszählers z verbunden, und an seinem R-Eingang R liegen ebenso wie am Takteingang des dritten D-Flipflops d3 vertikalfrequente Impulse v. Der D-Eingang D liegt am Q-Ausgang Q des RS-Flipflops r, und der Q̄-Ausgang des dritten D-Flipflops d3 liefert das Signal ck für die Farbunterdrückung.

Durch diese Anordnung wird jeweils während einer Halbbilddauer geprüft, ob der wählbare Zählerstand sa erreicht worden ist. Trifft dies zu, war eine ausreichend lange H-L-Folge am Ausgang des Subtrahierers sb aufgetreten und das Signal ck nimmt den L-Pegel an. Andernfalls hat das Signal ck den H-Pegel.

Da der im Akkumulator ak vorhandene Addierer in einer Zeilendauer nur während des Burst-Auftastimpulses ba arbeitet, kann er zweckmäßigerweise für die Subtrahierfunktion des Subtrahierers sb mitbenutzt werden und dieser dann als selbstständige Teilschaltung entfallen, so daß Akkumulator ak und Subtrahierer sb funktionell vereinigt sind.

Mit der Digitalschaltung der Erfindung ist eine den praktischen Bedürfnissen entsprechende störungsfreie Zeilen-Erkennung von SECAM-Farbdifferenzsignalen auf rein digitalem Wege möglich. Die Digitalschaltung läßt sich ohne weiteres halbleitertechnisch integrieren und kann beispielsweise in eine bereits vorhandene oder zu konzipierende größere integrierte Schaltung einbezogen werden. Zur Realisierung eignet sich insbesondere die Technik integrierter Isolierschicht-Feldeffekttransistor-Schaltungen, also die sogenannte MOS-Technik.

## Patentansprüche

1. Digitalschaltung zur Zeilen-Erkennung von solchen SECAM-Farbdifferenzsignalen, die pro Zeile einen Farbburst enthalten, dessen Frequenz zeilenweise abwechselnd einen ersten oder einen zweiten Wert hat, in Farbfernsehempfängern mit von einem Systemtakt getakteten integrierten Schaltungen, gekennzeichnet durch folgende Merkmale:
- frequenzdemodulierte digitale Farbdifferenzsignale (ds) sind dem Dateneingang eines Akkumulators (ak) zugeführt, dessen Enable-Eingang (en) Burst-Auftastimpulse (ba) und dessen Takteingang ein aus dem Systemtakt abgeleitetes Taktsignal (ts) von ihm gegenüber niedrigerer Frequenz zugeführt sind,
- der Ausgang des Akkumulators (ak) liegt direkt am Minuend-Eingang und über einen Verzögerer (vz), dessen Verzögerzeit gleich einer Zeilendauer ist, am Subtrahendeingang eines Subtrahierers (sb),
- dessen Vorzeichenausgang liegt am jeweiligen D-Eingang (D) eines ersten bzw. eines zweiten D-Flipflops (d1, d2) und an einem Eingang eines EXOR-Gatters (x), mit dessen anderem Eingang der Q̄-Ausgang (Q̄) des ersten D-Flipflops (d1) verbunden ist,
- der Ausgang des EXOR-Gatters (x) liegt am Reset-Eingang (re) eines Vorwärtszählers (z), dessen Zähleingang (ze) ebenso wie dem jeweiligen Takteingang des ersten und des zweiten D-Flipflops (d1, d2) horizontalfrequente Impulse (h) zugeführt sind, und
- ein wählbarer Zählerstandausgang (sa) des Vorwärtszählers (z) liegt am Enable-Eingang (en) des zweiten D-Flipflops (d2), dessen Q-Ausgang (Q) dem des sogenannten SECAM-Flipflops entspricht.

2. Digitalschaltung nach Anspruch 1 zur zusätzlichen Erzeugung eines Signals (ck) für die Farbunterdrückung, gekennzeichnet durch
- ein RS-Flipflop (r), dessen S-Eingang (S) mit dem wählbaren Zählerstandausgang (sa) verbunden ist, und
- ein drittes D-Flipflop (d3), dessen D-Eingang (D) am Q-Ausgang (Q) des RS-Flipflops (r) liegt und dessen Takteingang ebenso wie dem R-Eingang (R) des RS-Flipflops (r) vertikalfrequente Impulse (v) zugeführt sind und dessen Q̄-Ausgang (Q̄) Signal (ck) liefert.

3. Digitalschaltung nach Anspruch 1 oder 2, dadurch gekennzeichnet, daß der Akkumulator (ak) und der Subtrahierer (sb) funktionell vereinigt sind.

## Claims

1. Digital circuit for line identification of SECAM color-difference signals containing one color burst per line, the color-burst frequency changing from line to line between a first and a second value, in color-television receivers with integrated circuits clocked by a system clock, characterized by the following features:
- Frequency-demodulated digital color-difference signals (ds) are applied to the data input of an accumulator (ak) whose enable input (en) is presented with burst gating pulses (ba), and whose clock input is presented with a clock signal (ts) derived from, and having a lower frequency value than the system clock,
- the output of the accumulator (ak) is coupled directly to the minuend input and, through a delay element (vz) producing a delay equal to one line period, to the subtrahend input of a subtracter (sb);
- the sign output of the subtracter (sb) is coupled to the D inputs (D) of a first D flip-flop (d1) and a second D flip-flop (d2) and to one input of an EXOR gate (x) having its other input connected to the Q̄ output (Q̄) of the first D flip-flop (d1);
- the output of the EXOR gate (x) is coupled to the reset input (re) of an up counter (z) whose count input (ze), like the clock inputs of the first and second D flip-flops (d1, d2), is presented with horizontal-frequency pulses (h), and
- a selectable count output (sa) of the up counter (z) is coupled to the enable input (en) of the second D flip-flop (d2), whose Q output (Q) corresponds to that of the so-called SECAM flip-flop.

2. A digital circuit as claimed in claim 1, for additionally generating a color-killing signal (ck), characterized by
- an RS flip-flop (r) having its S input (S) connected to the selectable count output (sa), and
- a third D flip-flop (d3) whose D input (D) is connected to the Q output (Q) of the RS flip-flop (r), and whose clock input, like the R input (R) of the RS flip-flop (r), is presented with vertical-frequency pulses (v), and whose Q̄ output (Q̄) provides the color-killing signal (ck).

3. A digital circuit as claimed in claim 1 or 2, characterized in that the accumulator (ak) and the subtracter (sb) are functionally united.

**Revendications**

1. Circuit numérique pour l'identification de la séquence ligne des signaux de différence de couleur SECAM qui contiennent par ligne une impulsion de synchronisation de chrominance dont la fréquence a alternativement à chaque ligne une première valeur ou une deuxième valeur, dans des récepteurs de télévision en couleurs comportant des circuits intégrés synchronisés par une synchronisation du système, caractérisé en ce que
- des signaux de différence de couleur (ds) numériques démodulés en fréquence sont amenés à l'entrée de données d'un accumulateur (ak) à l'entrée de validation (en) duquel des impulsions sélectives (ba) de l'impulsion de synchronisation de chrominance, et à l'entrée de synchronisation duquel un signal de synchronisation (ts) provenant de la synchronisation du système, de fréquence inférieure à celle de la synchronisation du système sont amenés,
- la sortie de l'accumulateur (ak) se trouve directement à l'entrée du terme principal et, par un temporisateur (vz) dont le temps de temporisation est égal à une durée de ligne, à l'entrée du terme soustractif d'un soustracteur (sb),
- sa sortie de signe se trouve à l'entrée (D) d'une première et d'une deuxième bascules D (d1, d2) et à une entrée d'une porte OU exclusif (x), à l'autre entrée de laquelle la sortie (Q̄) de la première bascule D (d1) est reliée,
- la sortie de la porte OU exclusif (x) se trouve à l'entrée de remise à l'état initial (re) d'un compteur ascendant (z) à l'entrée de comptage (ze) duquel, de même qu'à l'entrée de synchronisation de chacune des deux bascules D (d1, d2) des impulsions (h) à fréquence de ligne sont amenées,
- une sortie sélective (sa) de compte du compteur ascendant (z) se trouve à l'entrée de validation (en) de la deuxième bascule D (d2), dont la sortie (Q) correspondant à celle de la bascule dite bascule SECAM.

2. Circuit numérique selon la revendication 1 pour l'émission additionnelle d'un signal (ck) en vue de la suppression de la couleur, caractérisé en ce que
- une bascule RS (r) est prévue, dont l'entrée S (S) est reliée à la sortie de compte sélective (sa) du compteur, et

- une troisième bascule D (d3) est prévue, dont l'entrée D (D) se trouve à la sortie Q (Q) de la bascule RS (r) et à l'entrée de synchronisation de laquelle, de même qu'à l'entrée R (R) de la bascule RS (r), des impulsions (v) à fréquence de trames sont amenées et dont la sortie Q̄ (Q̄) émet le signal (ck).

3. Circuit numérique selon la revendication 1 ou 2, caractérisé en ce que l'accumulateur (ak) et le soustracteur (sb) sont réunis au point de vue fonctionnel.

FIG.1

FIG.2